# EUROPEAN PATENT SPECIFICATION

(11) **EP 4 156 356 B1**
(45) Date of publication and mention of the grant of the patent: **29.04.2026**
(21) Application number: 21898618.0
(22) Date of filing: 24.11.2021
(51) Int. Cl.: H01M 10/04, H01M 50/586, H01M 50/59, H01M 50/595, H01M 10/0587, H01M 50/46, H01M 50/531, H01M 50/533, H01M 50/538, H01M 50/107, H01M 50/152

(54) **CYLINDRICAL TYPE SECONDARY BATTERY**
ZYLINDRISCHE SEKUNDÄRBATTERIE
BATTERIE SECONDAIRE DE TYPE CYLINDRIQUE

(30) Priority: 24.11.2020 KR 20200159319; 19.11.2021 KR 20210160686
(43) Date of publication of application: 29.03.2023
(73) Proprietor: LG Energy Solution, Ltd., Seoul 07335 (KR)
(72) Inventor: JU, Jeong Hun, Daejeon 34122 (KR); KIM, Hyoung Kwon, Daejeon 34122 (KR); SON, Ju Nam, Daejeon 34122 (KR); KIM, Min Geun, Daejeon 34122 (KR)
(74) Representative: Goddar, Heinz J.
(86) International application number: PCT/KR2021/017435
(87) International publication number: WO 2022/114792

(56) References cited:
- JP-A- 2003 308 873
- JP-A- 2005 259 567
- KR-A- 20060 037 842
- KR-A- 20140 093 077
- KR-A- 20200 039 214
- US-A1- 2003 148 175
- US-A1- 2009 246 605

## Description

### CROSS-REFERENCE TO RELATED APPLICATION

The present application claims the benefit of the priority of Korean Patent Application Nos. 10-2020-0159319, filed on November 24, 2020, and 10-2021-0160686, filed on November 19, 2021.

### TECHNICAL FIELD

The present invention relates to a cylindrical type secondary battery, and more particularly, to a cylindrical type secondary battery in which, when a center pin is inserted into a core of an electrode assembly, and a cap assembly is coupled to an upper portion of a battery case, the inserted center pin supports the electrode assembly in a radial direction on an inner circumferential surface of the core by elasticity to prevent collapse of the core and increase in adhesion force of positive and negative electrodes.

### BACKGROUND ART

US 2009/246605 A1 relates to a lithium rechargeable battery having a centerpin whose top end and bottom end are blocked with a thermal cut off composition so as to reduce the void volume inside the bare cell at initial overcharge.

US 2003/148175 A1 relates to a sealed battery used as a power supply for portable electronic devices and the like.

In general, secondary batteries refer to batteries that are chargeable and dischargeable unlike non-rechargeable primary batteries and have been widely used as power sources of electronic devices such as cellular phones, notebook computers and camcorders, electric vehicles or the like.

According to the shape of a battery case, such secondary batteries may be classified into a cylindrical type battery and a square type battery in each of which an electrode assembly is embedded in a metal can having a cylindrical or a square shape, a pouch type battery in which an electrode assembly is embedded in a pouch-shaped case made of an aluminum laminate sheet, and so on.

A cylindrical type battery commonly includes an electrode assembly constituted by a positive electrode, a negative electrode and a separator, a can that accommodates the electrode assembly and is provided with an opening in an upper end thereof, and a cap assembly that finishes the opening in the upper end of the can. The positive electrode of the electrode assembly is connected to a positive electrode tab, and the positive electrode tab is connected to the cap assembly on the upper end of the opening by welding. The negative electrode of the electrode assembly is connected to a negative electrode tab, and the negative electrode tab is connected to a bottom surface of the can by welding.

Generally, the electrode assembly is formed in a jelly-roll shape by stacking the positive electrode, the separator and the negative electrode and winding the positive electrode, the separator and the negative electrode, which are stacked, in the form of a roll, and then is accommodated in the can. A core, a central-most portion of the electrode assembly wound in the jelly-roll shape, has a hollow structure irrespective of an outer diameter thereof. However, since such a hollow structure is at high risk of collapsing by deterioration of the electrode assembly, there are problems that safety of the battery is hard to achieve and performance degradation of the battery is concerned.

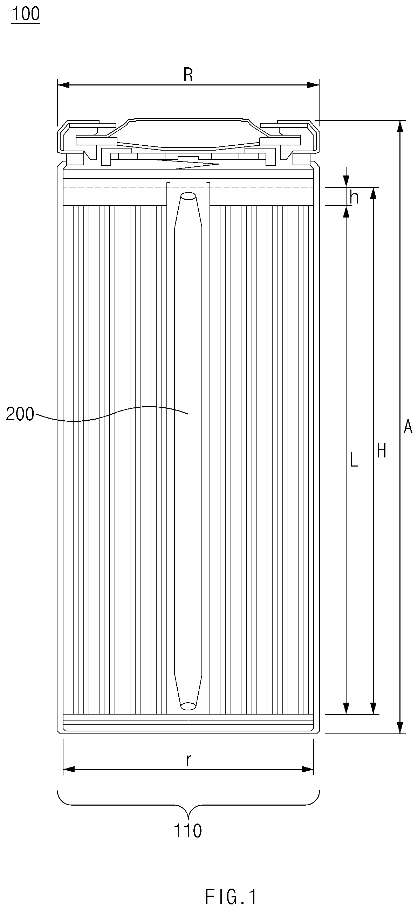

In order to solve these problems, a cylindrical type secondary battery having a center pin inserted thereinto, as illustrated in FIG. 1, has been developed. The cylindrical type secondary battery illustrated in FIG. 1 exhibits the excellent mechanical strength by inserting the center pin into a wound electrode assembly, and prevents an internal short circuit by avoiding a distal end of the center pin being in contact with the electrode assembly even when the center pin is modified by an external impact. However, even though the center pin is inserted, there is a problem that an adhesion force of the electrode assembly is still not high, and also the rate of an electrode reaction is not relatively high. Accordingly, there is a need to develop a cylindrical type secondary battery for improving output of the battery.

### DISCLOSURE OF THE INVENTION

### TECHNICAL PROBLEM

An object of the present invention devised to solve the problems as above is to provide a cylindrical type secondary battery in which a center pin is inserted into a core of an electrode assembly and a cap assembly is coupled to an upper portion of a battery case so that the inserted center pin may support the electrode assembly in a radial direction on an inner circumferential surface of the core by elasticity, thereby preventing collapse of the core and increasing an adhesion force of positive and negative electrodes, and also the center pin may function as a separate positive electrode tab or negative electrode tab as necessary, thereby reducing resistance.

### TECHNICAL SOLUTION

A cylindrical type secondary battery according to the present invention, as defined in claim 1, includes a jelly-roll-type electrode assembly wound by interposing a separator between sheet-shaped positive and negative electrodes; a battery case in which the electrode assembly is accommodated; a cap assembly coupled to an upper portion of the battery case; and a center pin inserted into a core of the electrode assembly and configured to support the electrode assembly in a radial direction on an inner circumferential surface of the core by elasticity. The center pin includes an elastic body having a length.

The center pin further includes a lower support which is coupled to one end of the elastic body and in contact with a lower portion of the battery case.

The center pin further includes an upper support which is coupled to the other end of the elastic body and in contact with the cap assembly.

The center pin may further include a tubular body which is provided between the lower support and the upper support and in which a hollow is formed to have the elastic body provided therein.

The tubular body may have an axial length shorter than the length of the elastic body.

A cutoff part taken along an axial direction may be formed in the tubular body.

The tubular body may be finished in a shape where an end, formed in the cutoff part, of the tubular body is rolled toward the inside of the hollow.

The elastic body may be curved in a positive radial direction by axial compressive stress acting on the lower support and the upper support to press the tubular body.

According to one alternative of the present disclosure, the upper support is a conductor, the lower support is a nonconductor, and the elastic body is a conductor.

A first positive electrode non-coating portion may be formed at a winding start portion of the sheet-shaped positive electrode, wherein one end of the first positive electrode non-coating portion may be longer than one end of the separator and protrude toward the inside of the core of the electrode assembly. The elastic body may be provided to be bonded to the first positive electrode non-coating portion protruding toward the core of the electrode assembly.

The upper support may be a conductor, the lower support may be a nonconductor, and each of the elastic body and the tubular body may be a conductor.

A first positive electrode non-coating portion may be formed at a winding start portion of the sheet-shaped positive electrode, wherein one end of the first positive electrode non-coating portion may be longer than one end of the separator and protrude toward the inside of the core of the electrode assembly. The tubular body may be provided to be bonded to the first positive electrode non-coating portion protruding toward the core of the electrode assembly.

A second positive electrode non-coating portion, and a positive electrode tab protruding from the second positive electrode non-coating portion, may be further formed at a central portion of the sheet-shaped positive electrode, wherein the positive electrode tab may be bonded to the upper support.

The positive electrode tab may be bonded to a top surface of the upper support.

An insulating tape may be attached to a portion, not protruding toward the inside of the core of the electrode assembly, of the first positive electrode non-coating portion.

According to another alternative of the present disclosure, the upper support is a nonconductor, the lower support isa conductor, and the elastic body is a conductor.

A first negative electrode non-coating portion may be formed at a winding start portion of the sheet-shaped negative electrode, wherein one end of the first negative electrode non-coating portion may be longer than one end of the separator and protrude toward the inside of the core of the electrode assembly. The elastic body may be provided to be bonded to the first negative electrode non-coating portion protruding toward the core of the electrode assembly.

The upper support may be a nonconductor, the lower support may be a conductor, and the elastic body and the tubular body may be conductors.

A first negative electrode non-coating portion may be formed at a winding start portion of the sheet-shaped negative electrode, wherein one end of the first negative electrode non-coating portion may be longer than one end of the separator and protrude toward the inside of the core of the electrode assembly. The tubular body may be provided to be bonded to the first negative electrode non-coating portion protruding toward the core of the electrode assembly.

A second negative electrode non-coating portion, and a negative electrode tab protruding from the second negative electrode non-coating portion, may be further formed at a winding end of the sheet-shaped negative electrode, wherein one the negative electrode tab may be bonded to the lower support.

An insulating tape may be attached to a portion, not protruding toward the inside of the core of the electrode assembly, of the first negative electrode non-coating portion.

The elastic body may have one of a cylindrical shape, a plate shape or a ring shape.

A horizontal cross-sectional area of the upper support may be larger than a horizontal cross-sectional area of the core of the electrode assembly.

A diameter of the upper support may be larger than a diameter of the core of the electrode assembly.

### ADVANTAGEOUS EFFECTS

The cylindrical type secondary battery according to the present invention, as defined in claim 1, includes the jelly-roll-type electrode assembly wound by interposing the separator between the sheet-shaped positive and negative electrodes, the battery case in which the electrode assembly is accommodated, the cap assembly coupled to the upper portion of the battery case, and the center pin inserted into the core of the electrode assembly and supporting the electrode assembly in the radial direction on the inner circumferential surface of the core by elasticity, wherein the center pin may include the elastic body having a length. Accordingly, when the center pin is inserted into the core of the electrode assembly and the cap assembly is coupled to the upper portion of the battery case, the inserted center pin may support the electrode assembly in the radial direction on the inner circumferential surface of the core by the elasticity, thereby preventing collapse of the core and increasing the adhesion force of the positive and negative electrodes, and the center pin may function as the separate positive electrode tab or negative electrode tab as necessary, thereby reducing resistance.

### BRIEF DESCRIPTION OF THE DRAWINGS

FIG. 1 is a cross-sectional view illustrating a typical cylindrical type secondary battery into which a center pin is inserted.
FIG. 2 is a cross-sectional view illustrating a cylindrical type secondary battery according to Embodiment 1 of the present invention into which a center pin is inserted.
FIG. 3 is a perspective view illustrating the center pin in the cylindrical type secondary battery according to Embodiment 1 of the present invention.
FIG. 4 is a perspective view illustrating a body of the center pin in the cylindrical type secondary battery according to Embodiment 1 of the present invention.
FIG. 5 is a perspective view illustrating elastic bodies having various shapes that is capable of being selected in the cylindrical type secondary battery according to Embodiment 1 of the present invention.
FIG. 6 is a cross-sectional view illustrating a cylindrical type secondary battery according to Embodiment 2 of the present invention into which a center pin is inserted.
FIG. 7 is a cross-sectional view of a wound electrode assembly embodied in the cylindrical type secondary battery according to Embodiment 2 of the present invention.
FIG. 8 is a plan view of a sheet-shaped positive electrode of an electrode assembly embodied in the cylindrical type secondary battery according to Embodiment 2 of the present invention.
FIG. 9 is a cross-sectional view illustrating a cylindrical type secondary battery according to Embodiment 3 of the present invention into which a center pin is inserted.
FIG. 10 is a cross-sectional view of a wound electrode assembly embodied in the cylindrical type secondary battery according to Embodiment 3 of the present invention.
FIG. 11 is a plan view of a sheet-shaped negative electrode of an electrode assembly embodied in the cylindrical type secondary battery according to Embodiment 3 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

### Embodiment 1

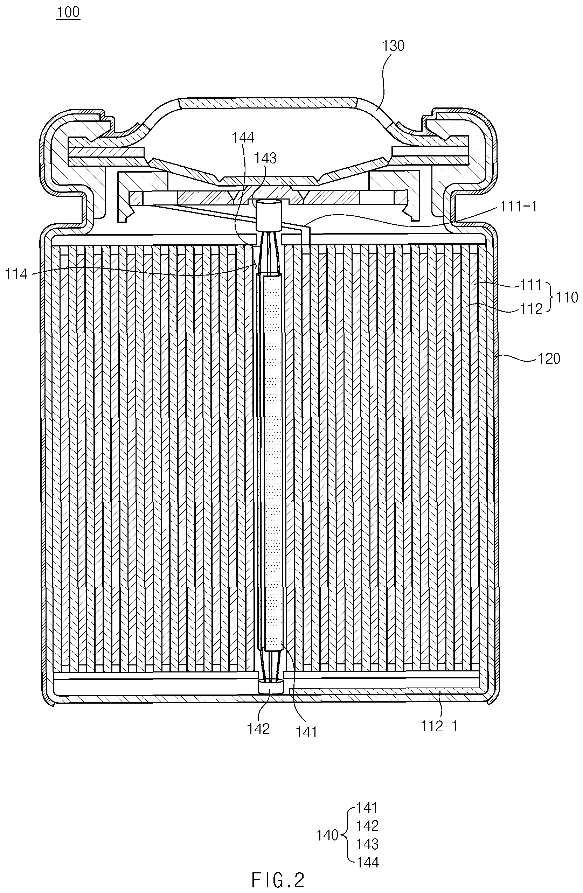

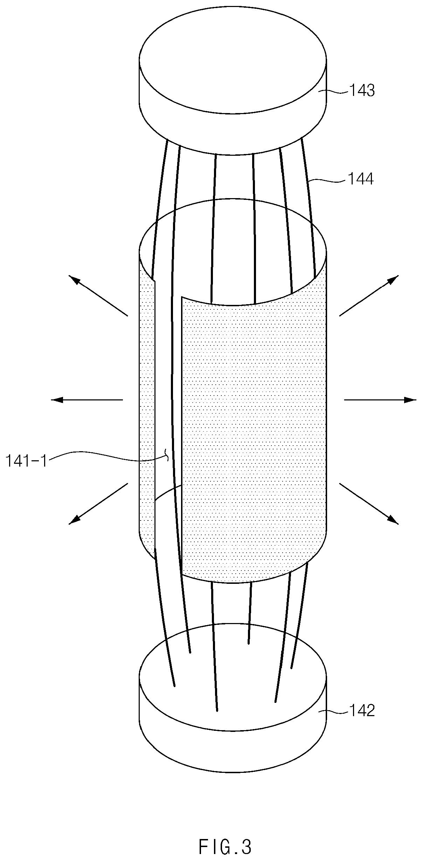

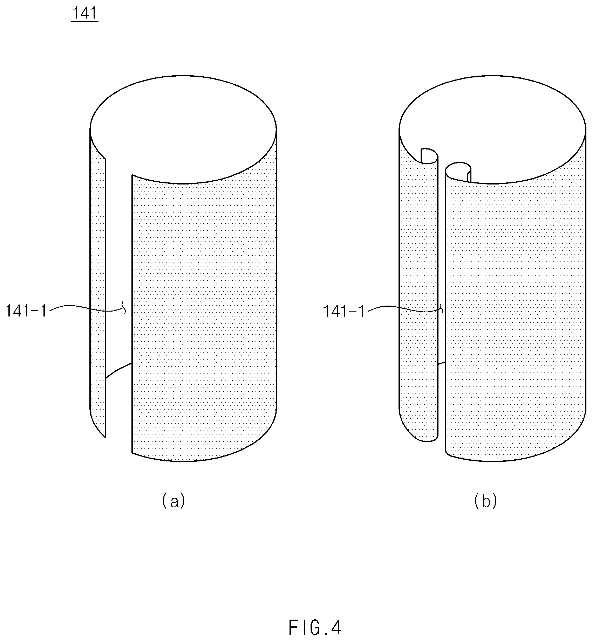

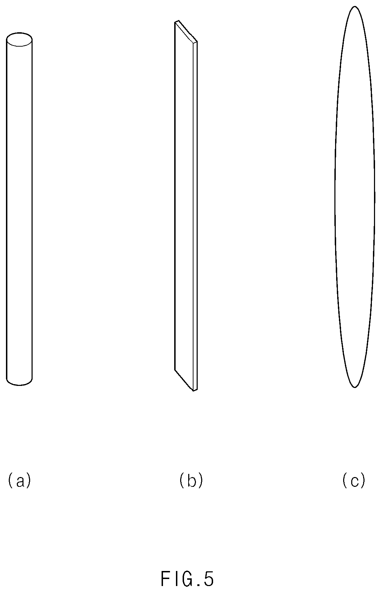

FIG. 2 is a cross-sectional view illustrating a cylindrical type secondary battery according to Embodiment 1 of the present invention into which a center pin is inserted. FIG. 3 is a perspective view illustrating the center pin in the cylindrical type secondary battery according to Embodiment 1 of the present invention. FIG. 4 is a perspective view illustrating a body of the center pin in the cylindrical type secondary battery according to Embodiment 1 of the present invention. FIG. 5 is a perspective view illustrating elastic bodies having various shapes that is capable of being selected in the cylindrical type secondary battery according to Embodiment 1 of the present invention.

Referring to FIGS. 2 to 5, a cylindrical type secondary battery 100 according to Embodiment 1 of the present invention includes an electrode assembly 110, a battery case 120, a cap assembly 130, and a center pin 140.

The electrode assembly 110 is a jelly-roll-type electrode assembly wound by interposing a separator 113 between sheet-shaped positive electrode 111 and negative electrode 112. Here, interposing the separator 113 means that, in order to prevent a short of a positive electrode 111 and a negative electrode 112, a positive electrode 111, a separator 113, a negative electrode 112, a separator 113, a positive electrode 111, and so on are alternately stacked in sequence, i.e., a separator 113 is disposed between respective electrodes. The sheet-shaped positive electrode 111 includes a positive electrode collector made of a thin metal plate with excellent conductivity, for example, an aluminum (Al) foil, and positive electrode active material layers applied to two opposed surfaces thereof. The sheet-shaped negative electrode 112 includes a negative electrode collector made of a thin metal plate with excellent conductivity, for example, a copper (Cu) or nickel (Ni) foil, and negative electrode active material layers applied to two opposed surfaces thereof. An area, on which the active material layer is not formed, of a collector is a non-coating portion and means an area on which a positive electrode or negative electrode collector is exposed. A positive electrode tab 111-1 and a negative electrode tab 112-1 are respectively formed on the positive electrode and negative electrode non-coating portions, and then are drawn out from an upper portion and a lower portion of the electrode assembly 110 by a certain length and electrically connected to the cap assembly 130.

The wound electrode assembly 110 may be accommodated inside the battery case 120, and the cap assembly 130 may be coupled to an upper portion of the battery case 120. The cap assembly 130 may be made by stacking a safety vent, a current interruptive device, a PTC element, a top cap, and so on in sequence. In particular, the top cap is seated on and coupled to an upper end of the cap assembly 130 and delivers a current generated from a secondary battery to the outside.

In addition, the cylindrical type secondary battery 100 according to Embodiment 1 of the present invention may include a center pin 140. The center pin 140 is inserted into a core 114 of the electrode assembly 110. Here, the core 114 means a hollow formed inside the wound electrode assembly 110 as illustrated in FIG. 2.

When the length of the center pin 140 is longer than the axial length of the wound electrode assembly 110, the center pin 140 inserted into the core 114 of the electrode assembly 110 protrudes from an upper portion of the wound electrode assembly 110. In addition, when the length of the center pin 140 is formed so that when the cap assembly 130 is coupled to the upper portion of the battery case 120, the protruding center pin 140 is in contact with a lower portion of the cap assembly 130 to be slightly pressed, the inserted center pin 140 supports the electrode assembly 110 in a radial direction on an inner circumferential surface of the core 114 by elasticity.

When the center pin 140 is inserted into the core 114 of the electrode assembly 110, the core 114 may be prevented from collapsing by deterioration of the electrode assembly 110, and just by coupling the cap assembly 130, the center pin 140 may support the electrode assembly 110 in the radial direction on the inner circumferential surface of the core 114, thereby improving an electrode adhesion force of the positive electrode 111 and the negative electrode 112 to improve performance of the battery.

Hereinafter, with reference to FIGS. 3 and 4, the center pin 140 will be described in terms of a detailed structure and a function of supporting the electrode assembly 110. Referring to FIG. 3, the center pin 140 may include a body 141, a lower support 142, an upper support 143 and an elastic body 144.

The body 141 may be made of a foil and have a tubular shape with a hollow. The hollow is formed in the tubular body 141 and thus, the inside thereof is provided with a space in which the elastic body 144 may be disposed. In addition, a cross-sectional shape of the body 141 may correspond to a cross section of the core 114 so that the center pin 140 may be readily inserted into the core 114 of the electrode assembly 110. The height, i.e., the axial length, of the tubular body 141 may be shorter than the length of the elastic body 144 so that the body 141 is not in contact with or bonded to the lower support 142 and the upper support 143. Accordingly, when the elastic body 144 presses the body 141 in the radial direction, the diameter of the body 141 may change while the lower support 142 and the upper support 143 are not affected.

Referring to (a) of FIG. 4, a cutoff part 141-1 taken along the axial direction may be further formed in the tubular body 141. Accordingly, when the elastic body 144 is curved to press the body 141, the diameter of the body 141 may easily change while the space of the cutoff part 141-1 becomes larger. In addition, as illustrated in (b) of FIG. 4, ends, formed in the cutoff part 141-1, of the body 141 may be finished in a shape rolled toward the inside of the hollow, thereby preventing damage of the cutoff part 141-1 of the body 141 made of a foil and reinforcing the axial strength of the body 141 weaken due to the cutoff part 141-1.

The elastic body 144 having a length may be provided in the hollow of the body 141. The elastic body 144 may be made of an elastic material, one end thereof may be coupled to the lower support 142, and the other end may be coupled to the upper support 143. The lower support 142 may be in contact with a lower portion of the battery case 120, and the upper support 143 may be in contact with a lower portion of the cap assembly 130. Due to such a structure, the elastic body 144 may be curved in a positive radial direction by axial compressive stress acting on the lower support 142 and the upper support 143 to press the body 141. In addition, even when the elastic body 144 is curved, the ends of the elastic body 144 are fixed by the lower support 142 and the upper support 143 so that a central portion of the elastic body 144 may be curved in the positive radial direction, i.e., outwardly, to press the body 141 (see FIG. 3). The lower support 142 and the upper support 143 are not limited to having shapes or dimensions corresponding to each other, and the height, i.e., the axial length, of any one may be longer as necessary.

The horizontal cross-sectional area of the upper support 143 may be larger than the horizontal cross-sectional area of the core of the electrode assembly 110. In addition, when the upper support 143 and the core of the electrode assembly 110 each have a circular shape, the diameter of the upper support 143 may be larger than the diameter of the core of the electrode assembly 110. That is, the horizontal cross-sectional area or diameter of the upper support 143 needs not to be the same as the diameter of the core of the electrode assembly 110, and the horizontal cross-sectional area or diameter of the upper support 143 may be larger than the cross-sectional area or diameter of the core of the electrode assembly 110. Accordingly, when the upper support 143 is in contact with the cap assembly 130, a more stable support force may be achieved.

In addition, the center pin 140 may be constituted by only the lower support 142, the upper support 143 and the elastic body 144 without the body 141 so that the elastic body 144 may directly press the electrode assembly 110 when the axial compressive stress acts.

The shape of the elastic body 144 is not limited, but preferably may be one of a cylindrical shape, a plate shape or a ring shape as illustrated respectively in (a), (b) and (c) of FIG. 5. There are advantages: in the case of a cylindrical shape, the elastic body 144 is easy to manufacture and takes up a small volume so that more elastic bodies 144 may be inserted into the body 141; in the case of a plate shape, the elastic body 144 tends to be curved in a direction perpendicular to a surface to ensure a consistent curving direction of the elastic body 144; and in the case of a ring shape, the elastic body 144 has the relatively high durability and is easy to curve, and uniform elasticity is possible to ensure.

The body 141, the lower support 142, the upper support 143 and the elastic body 144 of the center pin 140 may be nonconductors. That is, when the components of the center pin 140 are nonconductors, performance of the battery may be easily improved just by inserting the center pin 140 without large change in the typical battery structure. Thus, the center pin is economical and may be applied to cylindrical type secondary batteries in various shapes.

Due to the structure of the center pin 140 according to Embodiment 1 of the present invention, when the cap assembly 130 is coupled to the upper portion of the battery case 120, the inserted center pin 140 may support the electrode assembly 110 in the radial direction on the inner circumferential surface of the core 114 by elasticity, thereby preventing the core 114 of the electrode assembly 110 from collapsing, and increasing an adhesion force of the positive electrode 111 and negative electrode 112 to provide the cylindrical type secondary battery 100 with the improved performance.

### Embodiment 2

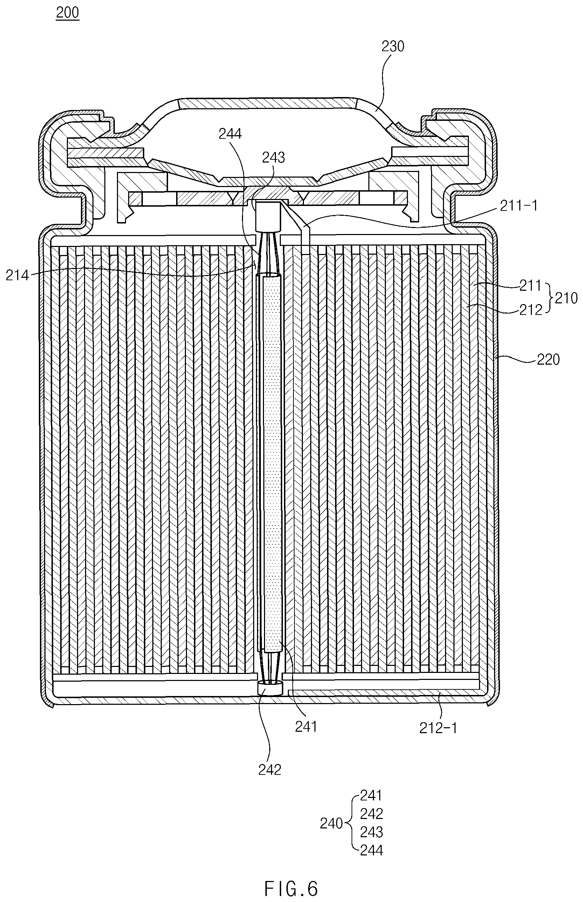

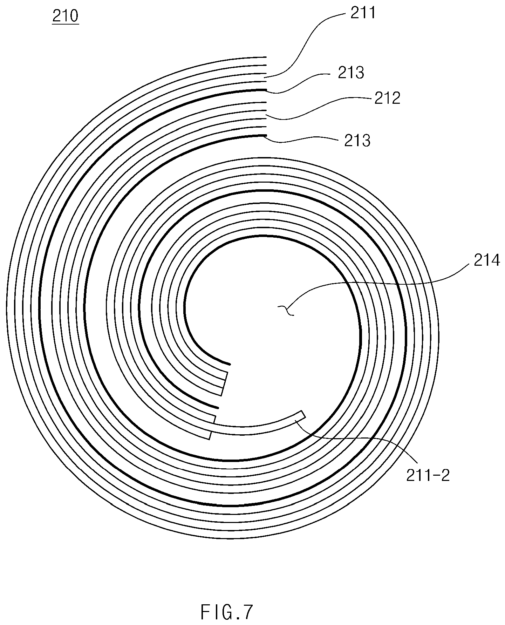

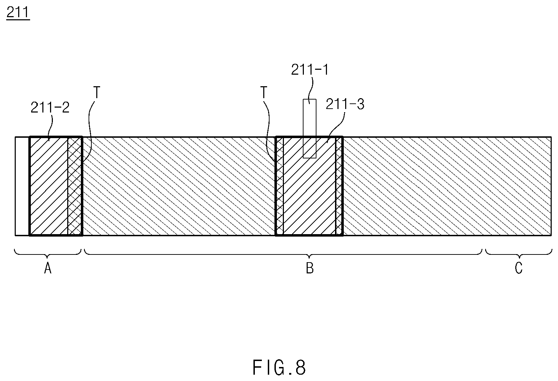

FIG. 6 is a cross-sectional view illustrating a cylindrical type secondary battery according to Embodiment 2 of the present invention into which a center pin is inserted. FIG. 7 is a cross-sectional view of a wound electrode assembly embodied in the cylindrical type secondary battery according to Embodiment 2 of the present invention. FIG. 8 is a plan view of a sheet-shaped positive electrode of an electrode assembly embodied in the cylindrical type secondary battery according to Embodiment 2 of the present invention.

Embodiment 2 of the present invention is different from Embodiment 1 in that a body 241, an elastic body 244 and an upper support 243 are conductors so that the upper support 243 of a center pin may function as a positive electrode tab.

The content in common with Embodiment 1 will be preferably omitted and the description of Embodiment 2 will be focused on differences. That is, it is apparent that the content that is not described in Embodiment 2 may be regarded as the content of Embodiment 1 if necessary.

Referring to FIG. 6, in a cylindrical type secondary battery 200 according to Embodiment 2 of the present invention, an upper support 243 of a center pin 240 may be a conductor, a lower support 242 may be a nonconductor, and an elastic body 244 may be a conductor. In addition, a body 241 of the center pin 240 may also be a conductor. Since the body 241, the elastic body 244 and the upper support 243 of the center pin 240 are conductors, the upper support 243 may function as a positive electrode tab.

Hereinafter, a process in which the upper support 243 functions as a positive electrode tab will be described in detail with reference to FIGS. 6 to 8.

A first positive electrode non-coating portion 211-2 may be formed at a winding start portion A of a sheet-shaped positive electrode 211. Here, one end of the first positive electrode non-coating portion 211-2 is longer than one end of a separator 213. Accordingly, when an electrode assembly 210 is wound, the first positive electrode non-coating portion 211-2 protrudes toward the inside of a core 214 of the electrode assembly 210, and the elastic body 244 of the center pin 240 may be provided to be bonded to the first positive electrode non-coating portion 211-2 protruding toward the core 214 of the electrode assembly 210. Alternatively, when the center pin 240 is provided with the body 241, the body 241 may be provided to be bonded to the first positive electrode non-coating portion 211-2 protruding toward the core 214 of the electrode assembly 210. That is, since the sheet-shaped positive electrode 211, and the body 241, the elastic body 244 and the upper support 243 of the center pin 240, are electrically connected, the upper support 243 may function as a positive electrode tab, and the upper support 243 may be bonded to a lower end of a cap assembly 230 and electrically connected to the outside.

In the cylindrical type secondary battery 200 according to Embodiment 2 of the present invention, a positive electrode tab 211-1 drawn out from an upper portion of the electrode assembly 210 by a certain length and electrically connected to the cap assembly 230 may be omitted as necessary. Accordingly, an internal structure of the battery may be simplified to stably ensure performance of the battery, and processes of manufacturing and attaching the positive electrode tab 211-1 may be omitted to save the costs thereof.

Embodiment 2 of the present invention may be applied even when a separate positive electrode tab 211-1 is provided like in a general battery structure. A second positive electrode non-coating portion 211-3, and a positive electrode tab 211-1 protruding from the second positive electrode non-coating portion 211-3, may be further formed at a central portion B of the sheet-shaped positive electrode 211. Here, the positive electrode tab 211-1 may be bonded to the upper support 243, and the upper support 243 may be bonded and electrically connected to the cap assembly 230 to finally function as a positive electrode tab. In such a structure, the sheet-shaped positive electrode 211 may be provided with multiple electrode tabs (positive electrode tabs), thereby improving output of the battery and remarkably improving performance. The upper support 243 may be bonded to the cap assembly 230 by welding. However, this is just one example, and Embodiment is not limited thereto. The upper support 243 may be bonded by various methods.

In addition, the positive electrode tab 211-1 may be bonded to the upper support 243, preferably on a top surface of the upper support 243. When the positive electrode tab 211-1 is bonded to the top surface of the upper support 243, the positive electrode tab 211-1 bonded to the top surface of the upper support 243 is in contact with the cap assembly 230 by elasticity without separately welding the positive electrode tab 211-1 on the cap assembly 230. Accordingly, the positive electrode tab 211-1 and the upper support 243 may function as leading wires. In addition, the positive electrode tab may be more stably bonded compared to when the positive electrode tab is bonded to a side surface of the upper support 243.

The horizontal cross-sectional area of the upper support 243 may be larger than the horizontal cross-sectional area of the core of the electrode assembly 210.

In addition, when the upper support 243 and the core of the electrode assembly 210 each have a circular shape, the diameter of the upper support 243 may be larger than the diameter of the core of the electrode assembly 210. That is, the horizontal cross-sectional area or diameter of the upper support 243 needs not to be the same as the cross-sectional area or diameter of the core of the electrode assembly 210. The horizontal cross-sectional area or diameter of the upper support 243 may be larger than the diameter of the core of the electrode assembly 210. Accordingly, when the upper support 243 is in contact with the cap assembly 230, a more stable support force may be achieved. In addition, when the positive electrode tab 211-1 is bonded to the upper support 243, there is an effect of improving bondability. When the upper support 243 functions as a positive electrode tab, the horizontal cross-sectional area or diameter of the upper support 243 may be larger than the cross-sectional area or diameter of the core of the electrode assembly 210 and the vertical (or axial) length may be shorter as necessary, thereby lowering the magnitude of resistance of the upper support 243.

In addition, an insulating tape T may be attached to a portion, not protruding toward the inside of the core 214 of the electrode assembly 210, of a first positive electrode non-coating portion 211-2. The insulating tape T may be attached also to a second positive electrode non-coating portion 211-3. In this case, a short that may occur when a separator 213 is damaged may be prevented and thus, there is an effect of improving safety of the battery. In particular, when the insulating tape T is attached to the boundary between a positive electrode active material layer and the first or second positive electrode non-coating portion 211-2 and 211-3, an active material may be prevented from being extracted due to a stepped portion between an active material-coated portion and a non-coating portion.

### Embodiment 3

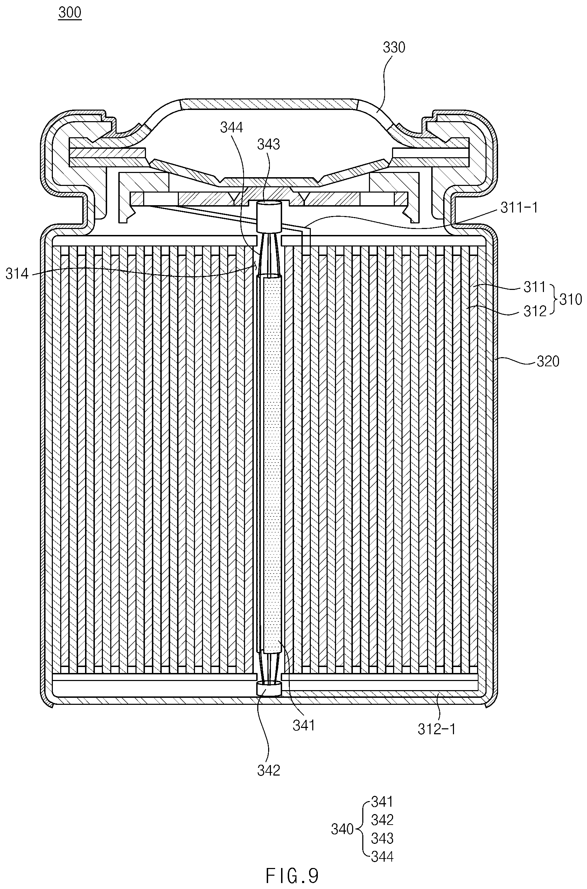

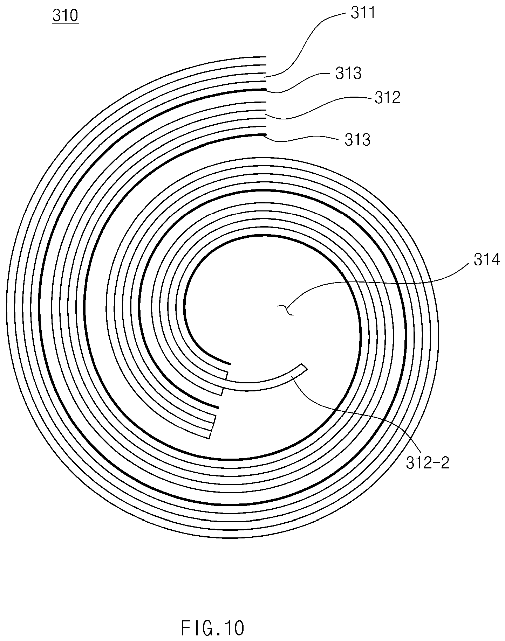

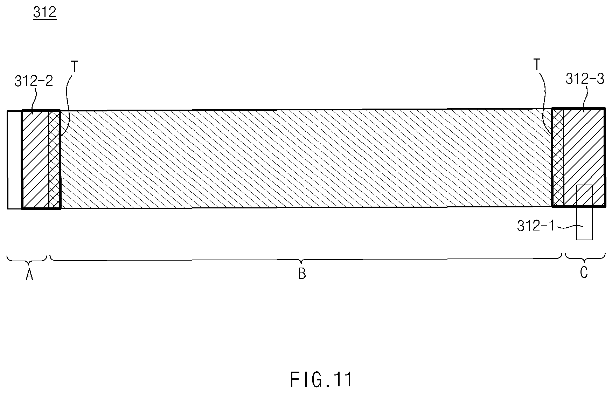

FIG. 9 is a cross-sectional view illustrating a cylindrical type secondary battery according to Embodiment 3 of the present invention into which a center pin is inserted. FIG. 10 is a cross-sectional view of a wound electrode assembly embodied in the cylindrical type secondary battery according to Embodiment 3 of the present invention. FIG. 11 is a plan view of a sheet-shaped negative electrode of an electrode assembly embodied in the cylindrical type secondary battery according to Embodiment 3 of the present invention.

Embodiment 3 of the present invention is different from embodiments 1 and 2 in that a body 341, an elastic body 344 and a lower support 342 are conductors so that the lower support 342 of a center pin 340 may function as a negative electrode tab.

The content in common with embodiments 1 and 2 will be preferably omitted and the description of Embodiment 3 will be focused on differences. That is, it is apparent that the content that is not described in Embodiment 3 may be regarded as the content of embodiments 1 and 2 if necessary.

Referring to FIG. 9, in a cylindrical type secondary battery 300 according to Embodiment 3 of the present invention, an upper support 343 of a center pin 340 may be a nonconductor, a lower support 342 may be a conductor, and an elastic body 344 may be a conductor. In addition, a body 341 of the center pin 340 may also be a conductor. Since the body 341, the elastic body 344 and the lower support 342 of the center pin 340 are conductors, the lower support 342 may function as a negative electrode tab.

Hereinafter, a process in which the lower support 342 functions as a negative electrode tab, will be described in detail with reference to FIGS. 9 to 11.

A first negative electrode non-coating portion 312-2 may be formed at a winding start portion A of a sheet-shaped negative electrode 312. Here, one end of the first negative electrode non-coating portion 312-2 is longer than one end of a separator 313. Accordingly, when an electrode assembly 310 is wound, the first negative electrode non-coating portion 312-2 protrudes toward the inside of a core 314 of the electrode assembly 310, and the elastic body 344 of the center pin 340 may be provided to be bonded to the first negative electrode non-coating portion 312-2 protruding toward the core 314 of the electrode assembly 310. Alternatively, when the center pin 340 is provided with the body 341, the body 341 may be provided to be bonded to the first negative electrode non-coating portion 312-2 protruding toward the core 314 of the electrode assembly 310. That is, since the sheet-shaped negative electrode 311, and the body 341, the elastic body 344 and the lower support 342 of the center pin 340, are electrically connected, the lower support 342 may function as a negative electrode tab, and the lower support 342 may be bonded to a lower portion of a battery case and electrically connected to the outside.

In the cylindrical type secondary battery 300 according to Embodiment 3 of the present invention, a negative electrode tab 312-1 drawn out from a lower portion of the electrode assembly 310 by a certain length and electrically connected to the lower portion of the battery case 320 may be omitted as necessary. Accordingly, an internal structure of the battery may be simplified to stably ensure performance of the battery, and processes of manufacturing and attaching the negative electrode tab may be omitted to save the costs thereof.

Embodiment 3 of the present invention may also be applied even when a separate negative electrode tab 312-1 is provided like in a general battery structure. A second negative electrode non-coating portion 312-3, and a negative electrode tab 312-1 protruding from the second negative electrode non-coating portion 312-3, may be further formed on a winding end C of the sheet-shaped negative electrode 312. Here, the negative electrode tab 312-1 may be bonded to the lower support 342, and the lower support 342 may be bonded and electrically connected to a lower end of the battery case 320 to finally function as a negative electrode tab. In such a structure, the sheet-shaped negative electrode 312 is provided with multiple electrode tabs (negative electrode tabs), thereby improving output and remarkably improving performance of the battery.

In addition, in the cylindrical type secondary battery according to Embodiment 3 of the present invention, the axial length of the upper support 343 may be longer than the length of the lower support 342. When the lower support 342 functions as a negative electrode tab, the length of the lower support 342 may be relatively longer to prevent a positive electrode tab 311-1 from being in contact with the elastic body 344 electrically connected to the sheet-shaped negative electrode 312, thereby enhancing safety of the battery.

An insulating tape T may be attached to a portion, not protruding toward the inside of the core 314 of the electrode assembly 310, of a first negative electrode non-coating portion 312-2. The insulating tape T may be attached also to a second negative electrode non-coating portion 312-3. In this case, a short that may occur when a separator 313 is damaged may be prevented and thus, there is an effect of improving safety of the battery. In particular, when the insulating tape T is attached to the boundary between a negative electrode active material layer and the first or second negative electrode non-coating portion 312-2 and 312-3, an active material may be prevented from being extracted due to a stepped portion between an active material-coated portion and a non-coating portion.

Although the present invention has been described with reference to the limited embodiments and drawings, the present invention is not limited thereto, the scope of protection is defined in the appended claims.

### [Description of the Symbols]

100, 200, 300: Cylindrical type battery
110, 210, 310: Electrode assembly
111, 211, 311: Positive electrode
112, 212, 312: Negative electrode
111-1, 211-1, 311-1: Positive electrode tab
112-1, 212-1, 312-1: Negative electrode tab
211-2: First positive electrode non-coating portion
211-3: Second positive electrode non-coating portion
312-2: First negative electrode non-coating portion
312-3: Second negative electrode non-coating portion
113, 213, 313: Separator
114, 214, 314: Core
120, 220, 320: Battery case
130, 230, 330: Cap assembly
140, 240, 340: Center pin
141, 241, 341: Body
141-1: Cutoff part
142, 242, 342: Lower support
143, 243, 343: Upper support
144, 244, 344: Elastic body
A: Winding start portion
B: Central portion
C: Winding end
T: Insulating tape

## Claims

1. A cylindrical type secondary battery (100, 200, 300) comprising:
a jelly-roll-type electrode assembly (110, 210, 310) wound by interposing a separator (113, 213, 313) between sheet-shaped positive and negative electrodes (111, 112, 211, 212, 311, 312);
a battery case (120, 220, 320) in which the electrode assembly (110, 210, 310) is accommodated;
a cap assembly (130, 230, 330) coupled to an upper portion of the battery case (120, 220, 320); and
a center pin (140, 240, 340) inserted into a core (114, 214, 314) of the electrode assembly (110, 210, 310) and configured to support the electrode assembly (110, 210, 310) in a radial direction on an inner circumferential surface of the core (114, 214, 314) by elasticity,
wherein the center pin (140, 240, 340) comprises an elastic body (144, 244, 244) having a length, wherein the center pin (140, 240, 340) further comprises a lower support (142, 242, 342) which is coupled to one end of the elastic body (144, 244, 244) and in contact with a lower portion of the battery case (120, 220, 320), wherein the center pin (140, 240, 340) further comprises an upper support (143, 243, 343) which is coupled to the other end of the elastic body (144, 244, 244) and in contact with the cap assembly (130, 230, 330),
**characterized in that**
the upper support (143, 243, 343) is a conductor, the lower support (142, 242, 342) is a nonconductor, and the elastic body (144, 244, 244) is a conductor, or **in that**
the upper support (143, 243, 343) is a nonconductor, the lower support (142, 242, 342) is a conductor, and the elastic body (144, 244, 244) is a conductor.

2. The cylindrical type secondary battery (100, 200, 300) of claim 1, wherein the center pin (140, 240, 340) further comprises a tubular body (141, 241, 341) which is provided between the lower support (142, 242, 342) and the upper support (143, 243, 343) and in which a hollow is formed to have the elastic body (144, 244, 244) provided therein.

3. The cylindrical type secondary battery (100, 200, 300) of claim 2, wherein the tubular body (141, 241, 341) has an axial length shorter than the length of the elastic body (144, 244, 244).

4. The cylindrical type secondary battery (100, 200, 300) of claim 3, wherein a cutoff part (141-1) taken along an axial direction is formed in the tubular body (141, 241, 341).

5. The cylindrical type secondary battery (100, 200, 300) of claim 4, wherein the tubular body (141, 241, 341) is finished in a shape where an end, formed in the cutoff part (141-1), of the tubular body (141, 241, 341) is rolled toward the inside of the hollow.

6. The cylindrical type secondary battery (100, 200, 300) of claim 2, wherein the elastic body (144, 244, 244) is curved in a positive radial direction by axial compressive stress acting on the lower support (142, 242, 342) and the upper support (143, 243, 343) to press the tubular body (141, 241, 341).

7. The cylindrical type secondary battery (100, 200, 300) of claim 1, wherein a first positive electrode non-coating portion (211-2, 311-2) is formed at a winding start portion (A) of the sheet-shaped positive electrode (111, 211, 311), wherein one end of the first positive electrode non-coating portion (211-2, 311-2) is longer than one end of the separator (113, 213, 313) and protrudes toward the inside of the core (114, 214, 314) of the electrode assembly (110, 210, 310), and
the elastic body (144, 244, 244) is provided to be bonded to the first positive electrode non-coating portion (211-2, 311-2) protruding toward the core (114, 214, 314) of the electrode assembly (110, 210, 310).

8. The cylindrical type secondary battery (100, 200, 300) of claim 2, wherein the upper support (143, 243, 343) is a conductor, the lower support (142, 242, 342) is a nonconductor, and each of the elastic body (144, 244, 244) and the tubular body (141, 241, 341) is a conductor.

9. The cylindrical type secondary battery (100, 200, 300) of claim 8, wherein a first positive electrode non-coating portion (211-2, 311-2) is formed at a winding start portion (A) of the sheet-shaped positive electrode (111, 211, 311), wherein one end of the first positive electrode non-coating portion (211-2, 311-2) is longer than one end of the separator (113, 213, 313) and protrudes toward the inside of the core (114, 214, 314) of the electrode assembly (110, 210, 310), and
the tubular body (141, 241, 341) is provided to be bonded to the first positive electrode non-coating portion (211-2, 311-2) protruding toward the core (114, 214, 314) of the electrode assembly (110, 210, 310).

10. The cylindrical type secondary battery (100, 200, 300) of one of the preceding claims , wherein a second positive electrode non-coating portion (211-3, 311-3) and a positive electrode tab (111-1, 211-1, 311-1) protruding from the second positive electrode non-coating portion (211-3, 311-3) are further formed at a central portion (B) of the sheet-shaped positive electrode (111, 211, 311), wherein the positive electrode tab (111-1, 211-1, 311-1) is bonded to the upper support (143, 243, 343).

11. The cylindrical type secondary battery (100, 200, 300) of claim 10, wherein the positive electrode tab (111-1, 211-1, 311-1) is bonded to a top surface of the upper support (143, 243, 343).

12. The cylindrical type secondary battery (100, 200, 300) of claim 7 or 9, wherein an insulating tape (T) is attached to a portion, not protruding toward the inside of the core (114, 214, 314) of the electrode assembly (110, 210, 310), of the first positive electrode non-coating portion (211-2, 311-2).

13. The cylindrical type secondary battery (100, 200, 300) of claim 1, wherein a first negative electrode non-coating portion (212-2, 312-2) is formed at a winding start portion (A) of the sheet-shaped negative electrode (112, 212, 312), wherein one end of the first negative electrode non-coating portion (212-2, 312-2) is longer than one end of the separator (113, 213, 313) and protrudes toward the inside of the core (114, 214, 314) of the electrode assembly (110, 210, 310), and
the elastic body (144, 244, 244) is provided to be bonded to the first negative electrode non-coating portion (212-2, 312-2) protruding toward the core (114, 214, 314) of the electrode assembly (110, 210, 310).

14. The cylindrical type secondary battery (100, 200, 300) of claim 2, wherein the upper support (143, 243, 343) is a nonconductor, the lower support (142, 242, 342) is a conductor, and the elastic body (144, 244, 244) and the tubular body (141, 241, 341) are conductors.

15. The cylindrical type secondary battery (100, 200, 300) of claim 14, wherein a first negative electrode non-coating portion (212-2, 312-2) is formed at winding start portion (A) of the sheet-shaped negative electrode (112, 212, 312), wherein one end of the first negative electrode non-coating portion (212-2, 312-2) is longer than one end of the separator (113, 213, 313) and protrudes toward the inside of the core (114, 214, 314) of the electrode assembly (110, 210, 310), and
the tubular body (141, 241, 341) is provided to be bonded to the first negative electrode non-coating portion (212-2, 312-2) protruding toward the core (114, 214, 314) of the electrode assembly (110, 210, 310).

16. The cylindrical type secondary battery (100, 200, 300) of one of the preceding claims, wherein a second negative electrode non-coating portion (212-3, 312-3), and a negative electrode tab (112-1, 212-1, 312-1) protruding from the second negative electrode non-coating portion (212-3, 312-3), are further formed at a winding end (C) of the sheet-shaped negative electrode (112, 212, 312), wherein the negative electrode tab (112-1, 212-1, 312-1) is bonded to the lower support (142, 242, 342).

17. The cylindrical type secondary battery (100, 200, 300) of claim 13 or 15, wherein an insulating tape (T) is attached to a portion, not protruding toward the inside of the core (114, 214, 314) of the electrode assembly (110, 210, 310), of the first negative electrode non-coating portion (212-2, 312-2).

18. The cylindrical type secondary battery (100, 200, 300) of claim 1, wherein the elastic body (144, 244, 244) has one of a cylindrical shape, a plate shape or a ring shape.

19. The cylindrical type secondary battery (100, 200, 300) of claim 1, wherein a horizontal cross-sectional area of the upper support (143, 243, 343) is larger than a horizontal cross-sectional area of the core (114, 214, 314) of the electrode assembly (110, 210, 310).

20. The cylindrical type secondary battery (100, 200, 300) of claim 1, wherein a diameter of the upper support (143, 243, 343) is larger than a diameter of the core (114, 214, 314) of the electrode assembly (110, 210, 310).

## Patentansprüche

1. Eine zylindrische Sekundärbatterie (100, 200, 300), umfassend:
eine Elektrodenbaugruppe (110, 210, 310) vom Jelly-Roll-Typ, die durch Einfügen eines Separators (113, 213, 313) zwischen plattenförmigen positiven und negativen Elektroden (111, 112, 211, 212, 311, 312) gewickelt ist;
ein Batteriegehäuse (120, 220, 320), in dem die Elektrodenbaugruppe (110, 210, 310) untergebracht ist;
eine Kappenanordnung (130, 230, 330), die mit einem oberen Abschnitt des Batteriegehäuses (120, 220, 320) verbunden ist; und
einen Mittelstift (140, 240, 340), der in einen Kern (114, 214, 314) der Elektrodenbaugruppe (110, 210, 310) eingesetzt ist und so ausgebildet ist, dass er die Elektrodenbaugruppe (110, 210, 310) in Radialrichtung an einer inneren Umfangsfläche des Kerns (114, 214, 314) durch Elastizität stützt,
wobei der Mittelstift (140, 240, 340) einen elastischen Körper (144, 244, 244) mit einer Länge umfasst, wobei der Mittelstift (140, 240, 340) ferner eine untere Halterung (142, 242, 342) umfasst, die mit einem Ende des elastischen Körpers (144, 244, 244) gekoppelt ist und mit einem unteren Abschnitt des Batteriegehäuses (120, 220, 320 ) in Kontakt steht, wobei der Mittelstift (140, 240, 340) ferner eine obere Halterung (143, 243, 343) umfasst, die mit dem anderen Ende des elastischen Körpers (144, 244, 244) verbunden ist und mit der Kappenbaugruppe (130, 230, 330) in Kontakt steht,
**dadurch gekennzeichnet, dass**
die obere Halterung (143, 243, 343) ein Leiter ist, die untere Halterung (142, 242, 342) ein Nichtleiter ist und der elastische Körper (144, 244, 244) ein Leiter ist,
oder dass
die obere Halterung (143, 243, 343) ein Nichtleiter ist, die untere Halterung (142, 242, 342) ein Leiter ist und der elastische Körper (144, 244, 244) ein Leiter ist.

2. Zylindrische Sekundärbatterie (100, 200, 300) nach Anspruch 1, wobei der Mittelstift (140, 240, 340) ferner einen Rohrkörper (141, 241, 341) aufweist, der zwischen der unteren Halterung (142, 242, 342) und der oberen Halterung (143, 243, 343) vorgesehen ist und in dem ein Hohlraum ausgebildet ist, um den elastischen Körper (144, 244, 344) darin aufzunehmen.

3. zylindrische Sekundärbatterie (100, 200, 300) nach Anspruch 2, wobei der Rohrkörper (141, 241, 341) eine axiale Länge aufweist, die kürzer ist als die Länge des elastischen Körpers (144, 244, 244).

4. Zylindrische Sekundärbatterie (100, 200, 300) nach Anspruch 3, wobei in dem Rohrkörper (141, 241, 341) ein in axialer Richtung verlaufender Ausschnitt (141-1) ausgebildet ist.

5. Zylindrische Sekundärbatterie (100, 200, 300) nach Anspruch 4, wobei der Rohrkörper (141, 241, 341) in einer Form gebildet ist, bei der ein im Ausschnitt (141-1) ausgebildetes Ende des Rohrkörpers (141, 241, 341) zum Inneren des Hohlraums hin gerollt ist.

6. Zylindrische Sekundärbatterie (100, 200, 300) nach Anspruch 2, wobei der elastische Körper (144, 244, 344) durch eine auf die untere Stütze (142, 242, 342) und die obere Stütze (143, 243, 343) wirkende axiale Druckspannung in positiver Radialrichtung gekrümmt ist, um den Rohrkörper (141, 241, 341) zusammenzudrücken.

7. Zylindrische Sekundärbatterie (100, 200, 300) nach Anspruch 1, wobei ein erster unbeschichteter Abschnitt der positiven Elektrode (211-2, 311-2) an einem Wicklungsanfangsabschnitt (A) der blattförmigen positiven Elektrode (111, 211, 311) ausgebildet ist, wobei ein Ende des ersten unbeschichteten Abschnitts der positiven Elektrode (211-2, 311-2) länger ist als ein Ende des Separators (113, 213, 313) und in Richtung des Inneren des Kerns (114, 214, 314) der Elektrodenbaugruppe (110, 210, 310) vorsteht, und
wobei der elastische Körper (144, 244, 244) zum Verbinden mit dem ersten, zum Kern (114, 214, 314) der Elektrodenbaugruppe (110, 210, 310) hin vorstehenden, unbeschichteten Abschnitt der positiven Elektrode (211-2, 311-2) vorgesehen ist.

8. Zylindrische Sekundärbatterie (100, 200, 300) nach Anspruch 2, wobei die obere Halterung (143, 243, 343) ein Leiter ist, die untere Halterung (142, 242, 342) ein Nichtleiter ist und wobei sowohl der elastische Körper (144, 244, 344) als auch der Rohrkörper (141, 241, 341) jeweils ein Leiter ist.

9. Zylindrische Sekundärbatterie (100, 200, 300) nach Anspruch 8, wobei ein erster unbeschichteter Abschnitt der positiven Elektrode (211-2, 311-2) an einem Wicklungsanfangsabschnitt (A) der blattförmigen positiven Elektrode (111, 211, 311) ausgebildet ist, wobei ein Ende des ersten unbeschichteten Abschnitts der positiven Elektrode (211-2, 311-2) länger ist als ein Ende des Separators (113, 213, 313) und in Richtung des Inneren des Kerns (114, 214, 314) der Elektrodenbaugruppe (110, 210, 310) vorsteht, und
wobei der Rohrkörper (141, 241, 341) so ausgebildet ist, dass er mit dem ersten, zum Kern (114, 214, 314) der Elektrodenbaugruppe (110, 210, 310) hin vorstehenden, unbeschichteten Abschnitt der positiven Elektrode (211-2, 311-2) verbunden ist.

10. Zylindrische Sekundärbatterie (100, 200, 300) nach einem der vorstehenden Ansprüche, wobei ferner an einem mittleren Abschnitt (B) der blattförmigen positiven Elektrode (111, 211, 311) ein zweiter unbeschichteter Abschnitt der positiven Elektrode (211-3, 311-3) und eine positive Elektrodenlasche (111-1, 211-1, 311-1), die aus dem zweiten unbeschichteten Abschnitt der positiven Elektrode (211-3, 311-3) herausragt, ausgebildet sind, wobei die positive Elektrodenlasche (111-1, 211-1, 311-1) mit der oberen Halterung (143, 243, 343) verbunden ist.

11. Zylindrische Sekundärbatterie (100, 200, 300) nach Anspruch 10, wobei die positive Elektrodenlasche (111-1, 211-1, 311-1) mit einer Oberseite der oberen Halterung (143, 243, 343) verbunden ist.

12. Zylindrische Sekundärbatterie (100, 200, 300) nach Anspruch 7 oder 9, wobei ein Isolierband (T) an einem Abschnitt angebracht ist, der nicht in Richtung des Inneren des Kerns (114, 214, 314) der Elektrodenbaugruppe (110, 210, 310) des ersten unbeschichteten Abschnitts der positiven Elektrode (211-2, 311-2) vorsteht.

13. Zylindrische Sekundärbatterie (100, 200, 300) nach Anspruch 1, wobei ein erster unbeschichteter Abschnitt der negativen Elektrode (212-2, 312-2) an einem Wicklungsanfangsabschnitt (A) der blattförmigen negativen Elektrode (112, 212, 312) ausgebildet ist, wobei ein Ende des ersten unbeschichteten Abschnitts der negativen Elektrode (212-2, 312-2) länger ist als ein Ende des Separators (113, 213, 313) und in Richtung des Inneren des Kerns (114, 214, 314) der Elektrodenbaugruppe (110, 210, 310) vorsteht, und
wobei der elastische Körper (144, 244, 244) dazu vorgesehen ist, mit dem ersten unbeschichteten Abschnitt der negativen Elektrode (212-2, 312-2) verbunden zu werden, der in Richtung des Kerns (114, 214, 314) der Elektrodenbaugruppe (110, 210, 310) vorsteht.

14. Zylindrische Sekundärbatterie (100, 200, 300) nach Anspruch 2, wobei die obere Halterung (143, 243, 343) ein Nichtleiter ist, die untere Halterung (142, 242, 342) ein Leiter ist und wobei der elastische Körper (144, 244, 244) und der Rohrkörper (141, 241, 341) Leiter sind.

15. Zylindrische Sekundärbatterie (100, 200, 300) nach Anspruch 14, wobei ein erster unbeschichteter Abschnitt der negativen Elektrode (212-2, 312-2) am Wicklungsanfangsabschnitt (A) der blattförmigen negativen Elektrode (112, 212, 312) ausgebildet ist, wobei ein Ende des ersten unbeschichteten Abschnitts der negativen Elektrode (212-2, 312-2) länger ist als ein Ende des Separators (113, 213, 313) und in Richtung des Inneren des Kerns (114, 214, 314) der Elektrodenbaugruppe (110, 210, 310) vorsteht, und
wobei der Rohrkörper (141, 241, 341) dazu ausgebildet ist, mit dem ersten unbeschichteten Abschnitt der negativen Elektrode (212-2, 312-2) verbunden zu werden, der in Richtung des Kerns (114, 214, 314) der Elektrodenbaugruppe (110, 210, 310) vorsteht.

16. Zylindrische Sekundärbatterie (100, 200, 300) nach einem der vorstehenden Ansprüche, wobei ein zweiter unbeschichteter Abschnitt der negativen Elektrode (212-3, 312-3) und eine negative Elektrodenlasche (112-1, 212-1, 312-1), der aus dem zweiten unbeschichteten Abschnitt der negativen Elektrode (212-3, 312-3) herausragt, ferner an einem Wickelende (C) der blattförmigen negativen Elektrode (112, 212, 312) ausgebildet sind, wobei die Lasche der negativen Elektrode (112-1, 212-1, 312-1) mit der unteren Halterung (142, 242, 342) verbunden ist.

17. Zylindrische Sekundärbatterie (100, 200, 300) nach Anspruch 13 oder 15, wobei ein Isolierband (T) an einem Abschnitt angebracht ist, der nicht in Richtung des Inneren des Kerns (114, 214, 314) der Elektrodenbaugruppe (110, 210, 310) des ersten unbeschichteten Abschnitts (212-2, 312-2) der negativen Elektrode vorsteht.

18. Zylindrische Sekundärbatterie (100, 200, 300) nach Anspruch 1, wobei der elastische Körper (144, 244, 244) eine zylindrische Form, eine Plattenform oder eine Ringform aufweist.

19. Zylindrische Sekundärbatterie (100, 200, 300) nach Anspruch 1, wobei die horizontale Querschnittsfläche der oberen Halterung (143, 243, 343) größer ist als die horizontale Querschnittsfläche des Kerns (114, 214, 314) der Elektrodenbaugruppe (110, 210, 310).

20. Zylindrische Sekundärbatterie (100, 200, 300) nach Anspruch 1, wobei der Durchmesser der oberen Halterung (143, 243, 343) größer ist als der Durchmesser des Kerns (114, 214, 314) der Elektrodenbaugruppe (110, 210, 310).

## Revendications

1. Batterie secondaire de type cylindrique (100, 200, 300) comprenant :
un ensemble d'électrodes de type Jelly-Roll (110, 210, 310) enroulé en intercalant un séparateur (113, 213, 313) entre des électrodes positives et négatives en forme de feuille (111, 112, 211, 212, 311, 312) ;
un boîtier de batterie (120, 220, 320) dans lequel l'ensemble d'électrodes (110, 210, 310) est installé ;
un ensemble de couvercle (130, 230, 330) couplé à une partie supérieure du boîtier de la batterie (120, 220, 320) ; et
un axe central (140, 240, 340) inséré dans un noyau (114, 214, 314) de l'ensemble d'électrodes (110, 210, 310) et configuré pour supporter l'ensemble d'électrodes (110, 210, 310) dans une direction radiale sur une surface circonférentielle intérieure du noyau (114, 214, 314) par élasticité,
l'axe central (140, 240, 340) comprenant un corps élastique (144, 244, 244) ayant une longueur, l'axe central (140, 240, 340) comprenant en outre un support inférieur (142, 242, 342) couplé à un bout du corps élastique (144, 244, 244) et au contact d'une partie inférieure du boîtier de la batterie (120, 220, 320), l'axe central (140, 240, 340) comprenant en outre un support supérieur (143, 243, 343) couplé à l'autre bout du corps élastique (144, 244, 244) et au contact de l'ensemble du couvercle (130, 230, 330),
**caractérisé en ce que**
le support supérieur (143, 243, 343) est un conducteur, le support inférieur (142, 242, 342) est un non-conducteur, et le corps élastique (144, 244, 244) est un conducteur,
ou **en ce que**
le support supérieur (143, 243, 343) est un non-conducteur, le support inférieur (142, 242, 342) est un conducteur, et le corps élastique (144, 244, 244) est un conducteur,

2. Batterie secondaire de type cylindrique (100, 200, 300) selon la revendication 1, l'axe central (140, 240, 340) comprenant en outre un corps tubulaire (141, 241, 341) agencé entre le support inférieur (142, 242, 342) et le support supérieur (143, 243, 343), et dans lequel un creux est formé pour y placer le corps élastique (144, 244, 244).

3. Batterie secondaire de type cylindrique (100, 200, 300) selon la revendication 2, la longueur axiale du corps tubulaire (141, 241, 341) étant inférieure à celle du corps élastique (144, 244, 244).

4. Batterie secondaire de type cylindrique (100, 200, 300) selon la revendication 3, une partie découpée (141-1) prélevée dans le sens axial étant formée dans le corps tubulaire (141, 241, 341).

5. Batterie secondaire de type cylindrique (100, 200, 300) selon la revendication 4, le corps tubulaire (141, 241, 341) étant fini sous une forme où un bout, formé dans la partie découpée (141-1) du corps tubulaire (141, 241, 341), est roulé vers l'intérieur du creux.

6. Batterie secondaire de type cylindrique (100, 200, 300) selon la revendication 2, le corps élastique (144, 244, 244) étant courbé dans une direction radiale positive par une contrainte de compression axiale agissant sur le support inférieur (142, 242, 342) et le support supérieur (143, 243, 343) pour appuyer sur le corps tubulaire (141, 241, 341).

7. Batterie secondaire de type cylindrique (100, 200, 300) selon la revendication 1, une partie non-revêtue de première électrode positive (211-2, 311-2) étant formée dans une partie de départ d'enroulement (A) de l'électrode positive en forme de feuille (111, 211, 311), un bout de la partie non revêtue de première électrode positive (211-2, 311-2) étant plus long qu'un bout du séparateur (113, 213, 313) et faisant saillie vers l'intérieur du noyau (114, 214, 314) de l'ensemble d'électrodes (110, 210, 310), et
le corps élastique (144, 244, 244) étant agencé pour être fixé à la partie non revêtue de la première électrode positive (211-2, 311-2) saillante vers le noyau (114, 214, 314) de l'ensemble d'électrodes (110, 210, 310).

8. Batterie secondaire de type cylindrique (100, 200, 300) selon la revendication 2, le support supérieur (143, 243, 343) étant un conducteur, le support inférieur (142, 242, 342) étant un non-conducteur, et chacun du corps élastique (144, 244, 244) et du corps tubulaire (141, 241, 341) étant un conducteur.

9. Batterie secondaire de type cylindrique (100, 200, 300) selon la revendication 8, une partie non-revêtue de première électrode positive (211-2, 311-2) étant formée dans une partie de départ d'enroulement (A) de l'électrode positive en forme de feuille (111, 211, 311), un bout de la partie non revêtue de première électrode positive (211-2, 311-2) étant plus long qu'un bout du séparateur (113, 213, 313), et faisant saillie vers l'intérieur du noyau (114, 214, 314) de l'ensemble d'électrodes (110, 210, 310), et
le corps tubulaire (141, 241, 341) étant agencé pour être fixé à la partie non revêtue de première électrode positive (211-2, 311-2) saillante vers le noyau (114, 214, 314) de l'ensemble d'électrodes (110, 210, 310).

10. Batterie secondaire de type cylindrique (100, 200, 300) selon une des revendications précédentes, une partie non revêtue de deuxième électrode positive (211-3, 311-3) et une languette d'électrode positive (111-1, 211-1, 311-1), saillant de la partie non revêtue de deuxième électrode positive (211-3, 311-3), étant formées en outre dans une partie centrale (B) de l'électrode positive en forme de feuille (111, 211, 311), la languette d'électrode positive (111-1, 211-1, 311-1) étant fixée au support supérieur (143, 243, 343).

11. Batterie secondaire de type cylindrique (100, 200, 300) selon la revendication 10, la languette d'électrode positive (111-1, 211-1, 311-1) étant fixée à une surface supérieure du support supérieur (143, 243, 343).

12. Batterie secondaire de type cylindrique (100, 200, 300) selon la revendication 7 ou 9, un ruban isolant (T) étant fixé à une partie, non saillante vers l'intérieur du noyau (114, 214, 314) de l'ensemble d'électrodes (110, 210, 310), de la partie non revêtue de première électrode positive (211-2, 311-2).

13. Batterie secondaire de type cylindrique (100, 200, 300) selon la revendication 1, une partie non-revêtue de première électrode négative (212-2, 312-2) étant formée dans une partie de départ d'enroulement (A) de l'électrode négative en forme de feuille (112, 212, 312), un bout de la partie non revêtue de première électrode négative (212-2, 312-2) étant plus long qu'un bout du séparateur (113, 213, 313) et faisant saillie vers l'intérieur du noyau (114, 214, 314) de l'ensemble d'électrodes (110, 210, 310), et
le corps élastique (144, 244, 244) étant agencé pour adhérer à la partie non revêtue de la première électrode négative (212-2, 312-2) saillant vers le noyau (114, 214, 314) de l'ensemble d'électrodes (110, 210, 310).

14. Batterie secondaire de type cylindrique (100, 200, 300) selon la revendication 2, le support supérieur (143, 243, 343) étant un non-conducteur, le support inférieur (142, 242, 342) étant un conducteur, et le corps élastique (144, 244, 244) ainsi que le corps tubulaire (141, 241, 341) étant des conducteurs.

15. Batterie secondaire de type cylindrique (100, 200, 300) selon la revendication 14, une partie non-revêtue de première électrode négative (212-2, 312-2) étant formée dans une partie de départ d'enroulement (A) de l'électrode négative en forme de feuille (112, 212, 312), un bout de la partie non revêtue de première électrode négative (212-2, 312-2) étant plus long qu'un bout du séparateur (113, 213, 313) et faisant saillie vers l'intérieur du noyau (114, 214, 314) de l'ensemble d'électrodes (110, 210, 310), et
le corps tubulaire (141, 241, 341) étant agencé pour adhérer à la partie non revêtue de la première électrode négative (212-2, 312-2) saillant vers le noyau (114, 214, 314) de l'ensemble d'électrodes (110, 210, 310).

16. Batterie secondaire de type cylindrique (100, 200, 300) selon une des revendications précédentes, une partie non revêtue de deuxième électrode négative (212-3, 312-3) et une languette d'électrode négative (112-1, 212-1, 312-1), saillante de la partie non revêtue de deuxième électrode négative (212-3, 312-3), étant formées en outre à un départ d'enroulement (C) de l'électrode négative en forme de feuille (112, 212, 312), la languette d'électrode négative (112-1, 212-1, 312-1) étant fixée au support inférieur (142, 242, 342).

17. Batterie secondaire de type cylindrique (100, 200, 300) selon la revendication 13 ou 15, un ruban isolant (T) étant fixé à une partie, non saillante vers l'intérieur du noyau (114, 214, 314) de l'ensemble d'électrodes (110, 210, 310), de la partie non revêtue de première électrode positive (212-2, 312-2).

18. Batterie secondaire de type cylindrique (100, 200, 300) selon la revendication 1, la forme du corps élastique (144, 244, 244) étant une d'une forme cylindrique, d'une forme en plaque ou d'une forme annulaire.

19. Batterie secondaire de type cylindrique (100, 200, 300) selon la revendication 1, une section transversale horizontale du support supérieur (143, 243, 343) étant supérieure à une section transversale horizontale du noyau (114, 214, 314) de l'ensemble d'électrodes (110, 210, 310).

20. Batterie secondaire de type cylindrique (100, 200, 300) selon la revendication 1, un diamètre du support supérieur (143, 243, 343) étant plus grand qu'un diamètre du noyau (114, 214, 314) de l'ensemble d'électrodes (110, 210, 310).
